Europäisches Patentamt

(19) European Patent Office

Office européen des brevets

(11) Publication number: **0 213 777 B1**

# EUROPEAN PATENT SPECIFICATION

(12)

(45) Date of publication of patent specification:
16.01.91 Bulletin 91/03

(51) Int. Cl.⁵: **E03F 3/04**

(21) Application number: **86306005.9**

(22) Date of filing: **04.08.86**

(54) Branch members for soil and waste systems.

(30) Priority: **08.08.85 GB 8519927**

(43) Date of publication of application:
**11.03.87 Bulletin 87/11**

(45) Publication of the grant of the patent:
**16.01.91 Bulletin 91/03**

(84) Designated Contracting States:
**AT BE CH DE FR IT LI LU NL SE**

(56) References cited:
**FR-A- 2 372 368**
**GB-A- 1 107 023**
**US-A- 4 246 664**

(73) Proprietor: **Key Terrain Limited**
**Aylesford**
**Maidstone Kent, ME20 7PJ (GB)**

(72) Inventor: **Parker, Robert William**
**17 Tower Lane**
**Bearstead Maidstone Kent (GB)**
Inventor: **Snoad, Peter Stewart**
**Windslade 415 Canterbury Road**
**Kennington Ashford Kent (GB)**

(74) Representative: **Rushton, Ronald et al**
**SOMMERVILLE & RUSHTON 11 Holywell Hill**
**St. Albans Hertfordshire AL1 1EZ (GB)**

Jouve, 18, rue Saint-Denis, 75001 PARIS

## Description

This invention relates to soil and waste systems in which soil and waste pipes connect into a common stack. More particularly the invention relates to such systems in which the pipes and fittings are moulded from plastics materials such as polypropylene and PVC.

A soil pipe normally connects to a stack via a branch member which is fitted into the stack. The branch member has a through pipe forming part of the length of the stack and a branch arm which connects with the soil pipe leading from the outlet of a W.C. pan. Waste outlets from baths and basins normally connect to the stack via bosses projecting from the wall of the stack. In the case of a bathroom waste outlet, which may carry outflow from one or more appliances, connection to the stack may be via a pre-provided boss on the branch member. However, waste appliances may be at such distances from the branch member that, after allowance of necessary 'fall' on waste pipes, the point of outlet at the stack may be lower than the pre-provided boss on the branch. Such pre-provided bosses are normally at around the middle height of the branch, at something similar to the level of the branch inlet.

Since the area immediately lower than the pre-provided boss is normally taken up by a socket/spigot connection between the branch and the lower stack pipe, it is not therefore possible to retro-fit a boss to the branch. A boss is therefore often retro-fitted onto the pipework immediately below the branch connector. However, since there is often insufficient space between the bottom of the branch and the floor level, retro-fitted bosses disadvantageously often end up either partially or totally below finished floor level.

An object of the present invention is to obviate the above mentioned disadvantage.

The preamble of claim 1 describes an arrangement disclosed in the closest prior-art document GB-A-1107023.

According to the invention there is provided a branch member for a soil or waste system and comprising a through-pipe and a branch arm leading from the through-pipe, the through-pipe being in two lengths divided below the branch arm, the lower length having a boss projecting therefrom characterised in that the two lengths are relatively rotatable about the axis of the through-pipe so that the angular position of the boss can be adjusted to a desired position relatively to the branch arm and clamping means are provided for clamping said pipe lengths in said desired position and in that the amount of said relative rotation is limited by interongaging stops on said two lengths of the through-pipe.

With our invention a boss can be provided at as low a level as possible on the branch member, so that, in the great majority of siutations, it will be just above finished floor level. Bosses normally pre-provided on branches are usually much higher than this. To be doubly useful in the particular situation described, the pre-provided boss is made 'adjustable' to allow for direction of approach of waste pipe.

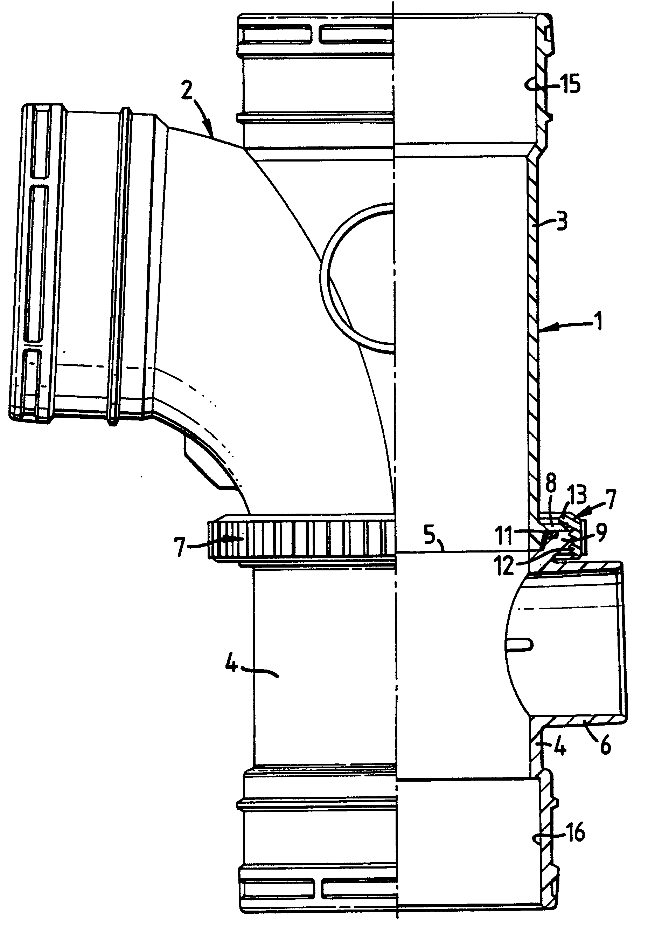

One construction of branch member in accordance with the invention will now be described by way of example with reference to the accompanying drawing, the single figure of which shows a half sectional, half elevational view of the branch member.

The branch member has a through-pipe 1 and a branch arm 2 which curves away from the through-pipe 1 to form a right angle bend. The through-pipe 1 is formed in two lengths 3 and 4, which abut each other on line 5 which is below the branch arm 2. The lower length 4 is formed with an integral boss 6 for connecting pipework e.g. the waste outlet of a bath to the stack.

The two lengths 3 and 4 are clamped together by a threaded clamping ring 7. To effect the clamping, the abutting ends of the lengths 3 and 4 are provided with outwardly projecting flanges 8 and 9, the flange 9 being shaped to accommodate sealing ring 11. The outer periphery of the flange 9 has a circumferental thread 12 on to which the clamping ring 7 is screwed. The ring 7 has an inwardly projecting lip 13 which engages the top of the flange 8. Thus as the ring 7 is screwed on to flange 9 engagement of the lip 13 with flange 8 presses the latter on to the flange 9. Hence the two through-pipe lengths 3 and 4 are drawn together and sealed at their abutting ends by sealing ring 11.

With the clamping ring 7 loosened off, lengths 3 and 4 can be rotated relatively to each other to set the desired relative positions of the branch arm 2 and the boss 6. The amount of rotation is limited by interengaging stops on the two pipe lengths 3 and 4.

The upper and lower ends of the branch member are shown formed with integral sockets 15 and 16 for connecting to adjacent pipe lengths. As an alternative the lower end may be formed as a spigot.

In practice the spacing between the connecting centres of the branch arm and boss, is less than 140 mm.

## Claims

1. A branch member for a soil or waste system and comprising a through-pipe (1) and a branch arm (2) leading from the through-pipe (1), the through-pipe (1)being in two lengths (3 and 4) divided below the branch arm (2), the lower length (4) having a boss (6) projecting therefrom characterised in that the two lengths (3 and 4) are relatively rotatable about the axis of the through-pipe (1) so that the angular position of the boss (6) can be adjusted to a desired position relatively to the branch arm (2), and clamping means are provided for clamping said pipe lengths in said desired position and in that the amount of said relative rotation is limited by interengaging stops on said two lengths of the through-pipe.

2. A branch member according to claim 1, characterised in that the two lengths (3 and 4) of the through-pipe (1) at their adjacent ends are each provided with an outwardly projecting flange (8,9), the flanges (8,9) abutting each other and said clamping means comprises a clamping ring (7) threadedly engaging one of the flanges (8,9) and having a lip (13) abutting the other flange to draw the flanges towards each other, the clamping ring (7) when loosened off permitting said relative rotation of the two lengths (3 and 4) about the axis of the through-pipe (1).

3. A branch member according to claim 2, characterised in that a sealing ring (11) locates between the two flanges (8,9).

## Ansprüche

1. Rohrverzweigung für ein Abwasser- oder Abfallsystem, mit einem Durchgangsrohr (1) sowie einem Abzweig (2) vom Durchgangsrohr (1), das in zwei Abschnitte (3, 4) unterhalb des Abzweiges (2) unterteilt ist, deren unterer Abschnitt (4) einen vorstehenden Stutzen (6) aufweist, dadurch gekennzeichnet, daß die beiden Abschnitte (3, 4) um die Achse des Durchgangsrohres (1) relativ zueinander verdrehbar sind, so daß die Winkelposition des Stutzens (6) in eine gewünschte Lage relativ zum Abzweig (2) einstellbar ist, und daß Spannmittel vorgesehen sind, um die Rohrabschnitte in gewünschten Positionen einzuspannen, und daß das Maß der relativen Verdrehung durch miteinander zusammenwirkende Anschläge auf den beiden Abschnitten des Durchgangsrohres begrenzt ist.

2. Rohrverzweigung nach Anspruch 1, dadurch gekennzeichnet, daß die beiden Abschnitte (3, 4) des Durchgangsrohres (1) an ihren einander benachbarten Enden jeweils mit einem nach außen vorragenden Flansch (8,9) ausgestattet sind, die aneinander anstoßen, daß die Spannmittel einen Spannring (7) umfassen, der mit einem der Flansche (8, 9) verschraubt ist und eine Lippe (13) aufweist, die am anderen Flansch anliegt, um die Flansche aneinander heranzuziehen, und daß der Spannring (7) in gelöstem Zustand eine Relativbewegung der beiden Abschnitte (3, 4) um die Achse des Durchgangsrohres (1) aufweist.

3. Rohrverzweigung nach Anspruch 2, dadurch gekennzeichnet, daß zwischen den beiden Flanschen (8, 9) ein Dichtungsring (11) eingelegt ist.

## Revendications

1. Elément de branchement pour un système de canalisations au sol, comportant un tuyau direct (1) et un embranchement (2) raccordé au tuyau direct (1), le tuyau direct (1) étant divisé en deux tronçons (3 et 4) en dessous de l'embranchement (2), le tronçon inférieur (4) étant pourvu d'un embout latéral protubérant (6), caractérisé en ce que les deux tronçons (3 et 4) sont pivotants l'un par rapport à l'autre autour de l'axe du tuyau direct (1) de telle sorte que la position angulaire de l'embout (6) peut être ajustée dans une position voulue par rapport à l'embranchement (2), en ce que des moyens de blocage sont prévus pour bloquer par serrage lesdits tronçons dans ladite position voulue, et en ce que l'amplitude de ladite rotation relative est limitée par des arrêts respectifs situés sur lesdits tronçons du tuyau direct.

2. Elément de branchement selon la revendication 1, caractérisé en ce que les deux tronçons (3 et 4) du tuyau direct (1) comportent chacun, à leur extrémité adjacente à l'autre tronçon, un rebord (8, 9) proéminent vers l'extérieur, les deux rebords (8, 9) étant aboutés, et en ce que lesdits moyens de blocage comportent une bague de blocage (7) engagée par vissage sur l'un des rebords (8, 9) et pourvue d'une lèvre (13) qui bute contre l'autre rebord de façon à tirer les rebords l'un vers l'autre, la bague de blocage (7) permettant, quand elle est dévissée, ladite rotation relative des deux tronçons (3 et 4) autour de l'axe du tuyau direct (1).

3. Elément de branchement selon la revendication 2, caractérisé en ce qu'un joint annulaire d'étanchéité (11) est placé entre les deux rebords (8, 9).